# EUROPÄISCHE PATENTSCHRIFT

(11) **EP 1 342 019 B1**
(45) Veröffentlichungstag und Bekanntmachung des Hinweises auf die Patenterteilung: **07.12.2005**
(21) Anmeldenummer: 01270712.1
(22) Anmeldetag: 22.11.2001
(51) Int. Cl.: F16F 1/373, F16F 1/42

(54) **FEDERELEMENT AUS ELASTISCHEM WERKSTOFF, INSBESONDERE AUS KUNSTSTOFF**
SPRING ELEMENT CONSISTING OF AN ELASTIC MATERIAL, ESPECIALLY PLASTIC
ELEMENT DE RESSORT EN UN MATERIAU ELASTIQUE, EN PARTICULIER EN MATIERE PLASTIQUE

(30) Priorität: 16.12.2000 DE 10063007
(43) Veröffentlichungstag der Anmeldung: 10.09.2003
(73) Patentinhaber: Ringfeder VBG GmbH, 47807 Krefeld (DE)
(72) Erfinder: DETZNER, Friedhelm, 47239 Duisburg (DE)
(74) Vertreter: DR. STARK & PARTNER
(86) Internationale Anmeldenummer: PCT/DE2001/004417
(87) Internationale Veröffentlichungsnummer: WO 2002/048571

(56) Entgegenhaltungen:
- DE-A- 19 707 434
- DE-B- 1 105 666
- DE-U- 1 838 120
- FR-A- 2 274 737
- GB-A- 1 557 991
- US-A- 3 864 785
- US-A- 5 791 637

## Beschreibung

Die Erfindung betrifft ein Federelement aus elastischem Werkstoff, insbesondere aus Kunststoff (z. B. Polyurethan), zur Aufnahme kinetischer Energie.

Neben den klassischen Federn aus Stahl (wie Schraubenfedern, Reibungsfedern) und den hydraulischen Federn (Stoßdämpfer) werden Federn aus Kunststoff zur Aufnahme hoher kinetischer Energien immer beliebter. Ein gewisser Nachteil von Federn aus Kunststoff liegt darin, dass sich ihre Eigenschaften bei größeren Temperaturschwankungen verändern. Dieser Nachteil wird jedoch durch geringeres Gewicht, vorhandene Dämpfungseigenschaft, einfache Herstellung und sauberes Handhabung (kein Rost, kein Einfetten) ausgeglichen. Durch eine Drucks- und Biegebeanspruchung wird eine optimale Materialausnutzung erreicht. Federn aus Gummi haben prinzipiell ähnliche Eigenschaften wie jene aus synthetisch hergestelltem Material, jedoch ist deren Leistungsvermögen erheblich geringer. Federn aus geschäumtem Material benötigen ein großes Bauvolumen, Federn aus massivem Material nur geringen Platz.

Die bekanntesten Federn aus massivem Material sind Rohrfedem Polyurethan (Z. B. Vulkollan der Firma Bayer AG) und Federn aus Copolymeren Polyester. Die relativ dickwandigen Rohrfedern (auch z. B. bekannt aus dem DE-Patent 11 47 255) werden nur bis zu 40% ihrer Ausgangshöhe belastet, um das Material nicht zu überdehnen, wobei mit zunehmender Einfederung die Kraft stetig ansteigt. Die Federn aus Copolymeren Polyester - bekannt aus DE 28 44 486 C2 (= US 4,198,037) und DE 35 33 435 C2 (= US 4,566,678) - müssen erst aufwendig auf 60 bis 90 % ihrer Ausgangshöhe vorgedrückt werden, weil das Material von Natur aus keine großen Federeigenschaften besitzt. Für dieses sogenannte Strecken der Fasern muß eine Presse vorgehalten werden, außerdem geht durch das Vordrücken einiges der ursprünglichen Bauhöhe verloren. Gleiches gilt auch für Federn nach DE 197 00 629 A1 (= US 5,791,637), die von der Form und Herstellung her aufwendiger sind. Aüs der US 3,864,785 ist ein Federelement mit den Merkmalen des Oberbegriffs von Patentanspruch 1 bekannt.

Bei vielen Anwendungen wird eine kurze Bauform der Feder mit hoher Arbeitsaufnahme und niedriger Gegenkraft bei hoher Dämpfung und guter Wiederholgenauigkeit gefordert, besonders als preiswerten Ersatz für wenig beanspruchte (weniger als eine Belastung pro Stunde) Hydraulikdämpfer. Man kann dies bei den bekannten Kunststofffedern durch Überbelasten erreichen. Der Nachteil wäre aber eine erhebliche Reduzierung der Lebensdauer und ein starkes Setzen der Feder. Die Erfindung liegt daher die Aufgabe zugrunde, ein kompaktes Federelement mit dämpfenden Eigenschaften zu erreichen, das die zuvor genannten Forderungen erfüllt und zugleich die vorgenannten Nachteile vermeidet.

Diese Aufgabe wird durch das im ersten Patentanspruch beschriebene erfindungsgemäße Federelement gelöst. Einem Merkmal von Anspruch 1 zufolge ist ein Rohrstück aus vorzugsweise massivem Polyurethan - einem von Natur aus federnden Werkstoff mit genügend hoher Dämpfung mit einer Grundplatte aus bevorzugt gleichem Werkstoff fest verbunden. Das Rohrstück hat eine Wanddicke entsprechend einem Verhältnis Außendurchmesser zu Innendurchmeser von < 2 und eine Bauhöhe im Bereich des 0,7- bis 1,3-fachen des Außendurchmessers Vorzugsweise enthält die Grundplatte mittig eine Bohrung zur einfachen Befestigung des Federelementes mit Hilfe eines Verbindungsmittels (Schraube) an einer horizontalen oder senkrechten Fläche eines vor Überiastung zu schützenden Bauteiles.

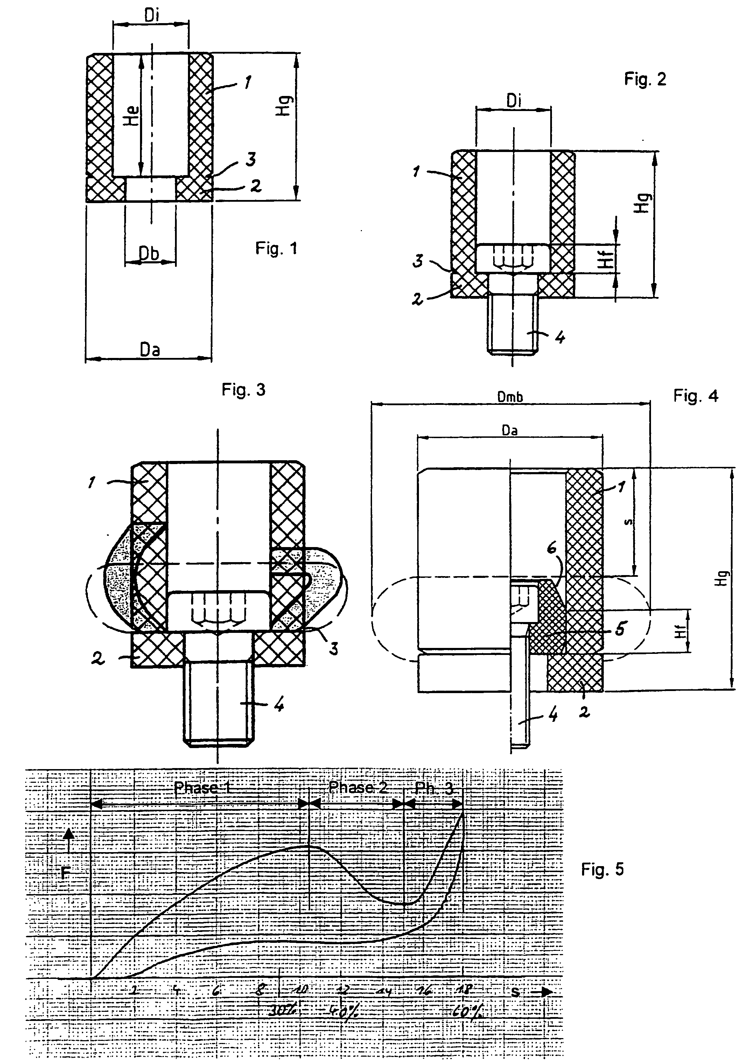

Bei dem so gestalteten und befestigten Federelement kann die Stirnfläche am offenen Ende des Rohrstückes mittels einer Gegenfläche durch eine Kraft beaufschlagt werden. Das Federelement kann auf 60% seiner ursprünglichen Bauhöhe zusammengedrückt werden, ohne dass der Werkstoff überdehnt wird. Hierbei durchläuft das Federelement drei Phasen, die nachfolgend anhand der Fig. 3 und 5 erläutert werden:
Phase 1: Das fest mit der Grundplatte verbundene Rohrstück wird axial gestaucht und dehnt sich dabei in seinem mittleren Bereich radial aus.
Phase 2: Bei einer Einfederung von 35% - dies entspricht einem äußeren Erscheinungsbild, bei dem sich ein Teil der Rohrwandung in einem Winkel von ca. 45° zur krafteinleitenden Gegenfläche ausgeformt hat - beginnt die Stirnfläche des Rohrstückes, sich nach innen zu falten. Dieser Vorgang findet aus inneren Formzwängen statt und benötigt kaum Kräfte von außen. Das Federelement nimmt jetzt eine von Spannungen freiere, günstigere Form an. Dadurch kann das Rohrstück des Federelementes bei reduzierter Kraft weiter zusammengedrückt werden ohne den Werkstoff zu überdehnen.
Phase 3: Bei einer Einfederung von etwa 50%, bezogen auf die Ausgangshöhe, beginnt die Kraft wieder anzusteigen, weil sich die orthogonal zur Krafteinleitung liegenden Flächen - insbesondere die sich durch die radiale Ausdehnung gebildeten inneren Flächen - immer mehr berühren und auch die Biegekräfte wieder ansteigen. Bei cirka 55% Einfederung sind die Kräfte bzw. Spannungen erreicht wie bei 35% Einfederung. Eine weitere Steigerung auf 60% ist nicht schädlich, da die Kraftverteilung jetzt großflächiger ist und zum Teil aus der höheren Biegung resultiert.

Bei Wegnahme der Kraft stellt sich - ohne Setzerscheinungen - die ursprüngliche Form und Höhe des Federelementes wieder ein. Nach Einhaltung einer Ruhephase, die im übrigen alle Elastomerfedem benötigen, ist der ggf. alle obigen Phasen umfassende Belastungsvorgang mit gleichen Werten reproduzierbar.

Vorteilhafte Ausgestaltungen der Erfindung sind in den Unteransprüchen angegeben.

Im weiteren wird die Erfindung anhand von Ausführungsbeispielen näher beschrieben, die in der Zeichnung prinzipartig dargestellt sind. Es zeigen
Fig. 1 ein Federelement als Einzelteil im Querschnitt,
Fig. 2 das Federelement nach Fig. 1 mit einem eingesetzten Verbindungs-und Führungsmittel,
Fig. 3 das Federelement nach Fig. 2 in unterschiedlichen Zuständen,
Fig. 4 ein hinsichtlich des Führungsmittels abgewandeltes Federelement,
Fig. 5 ein statisches Verformungsdiagramm mit Kraft F und Weg s,
Fig. 6 eine andere Ausführungsform des Federelementes,
Fig. 7 eine weitere Ausführungsform des Federelementes.

Das Federelement ist aus einem Rohrstück 1 und einer damit fest verbundenen Grundplatte 2 gebildet, die jeweils bevorzugt aus Polyurethan bestehen. Die Gesamthöhe des Federelementes ist mit Hg bezeichnet, die Bauhöhe des Rohrstückes 1 mit He. Die Wanddicke des Rohrstückes 1 entspricht einem Verhältnis Außendurchmesser Da zu Innendurchmesser Di von > 2. Die Bauhöhe He des Rohrstückes 1 liegt im Bereich des 0,7- bis 1,3-fachen des Außendurchmessers Da. Eine äußere umlaufende Nut 3 im Übergangsbereich von Rohrstück 1 und Grundplatte 2 verlagert die radiale Ausbauchung des Rohrstückes zur Mitte hin und begünstigt damit das gewünschte Verformungsverhalten.

Da das Rohrstück 1 nicht immer genau zentrisch belastet wird, sollte das Federelement zumindest auf einem Teilabschnitt geführt werden, um ein seitliches Wegdrücken zu vermeiden. Man kann dazu den Kopf einer zugleich der Befestigung des Federelementes dienenden Zylinderschraube 4 verwenden, die eine Bohrung mit Durchmesser Db in der Grundplatte 2 durchgreift. Der Kopfdurchmesser der Zylinderschraube 4 ist gleich dem Innendurchmesser Di des Rohrstückes 1. Die Höhe des Schraubenkopfes ergibt die Führungshöhe Hf. Gemäß der in Fig. 4 gezeigten Alternative ist der Einsatz einer separaten Führungshülse 5 möglich. Letztere hat den Vorteil, daß eine kleinere Befestigungsschraube 4 verwendet werden kann, die ihrerseits als Endanschlag das Federelement vor einer Überlastung schützt, die einem Federelement in der Regel nicht ohne weiteres anzusehen ist.

Vorteilhaft ist es, die Befestigungsschraube 4 derart in die Führungshülse 5 einzulassen, dass die Führungshülse 5 den Schraubenkopf überragt (siehe Fig. 4). So kann bei einer Belastung bis hin auf den Schraubenkopf als Anschlag die Führungshülse 5 noch Kräfte auf die ja auch aus Federwerkstoff bestehende Grundplatte 2 weiterleiten, wodurch ein zusätzlicher Überlastungsschutz mit sanftem Kraftanstieg auf z. B. den letzten 2 bis 3 mm des Federweges erreicht wird.

Eine Abschrägung 6 oder Abstufung der Führungshülse 5 im oberen Bereich dient der Führung der umgestülpten kraftbeaufschlagten Fläche des Rohrstückes 1, verhindert Materialquetschungen und erhöht somit die Lebensdauer des Federelementes.

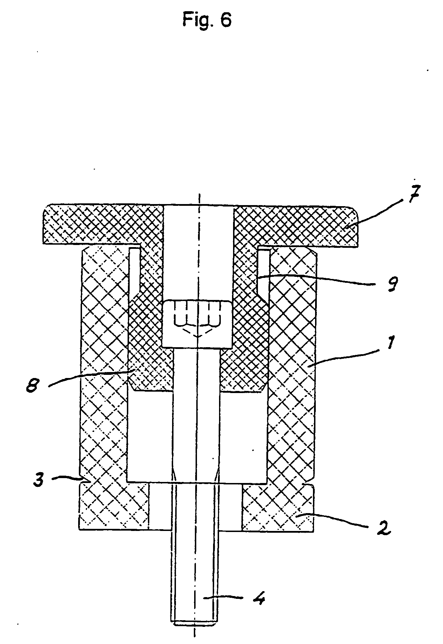

Bei dem in Fig. 6 gezeigten Federelement ist eine zusätzliche Prallplatte 7 mit einem Führungsansatz 8 vorgesehen, der in das Rohrstück 1 hineinragt und mit der Befestigungsschraube 4 zusammenwirkt. Eine zwischen der Prallplatte 7 und dem Führungsansatz 8 angeordnete nutförmige Ausnehmung 9 ermöglicht das gewollte Umstülpen des Rohrstückes 1 an dessen offenem Ende. Dieses Federelement ist vor allem für Beanspruchungsfälle geeignet, bei denen die Kräfte nicht in axialer Richtung des Rohrstückes 1 auftreten. Derartige Schrägstöße sind z. B. aufzunehmen, wenn das Federelement im Sinne eines Puffers an Fahrzeugen verwendet wird.

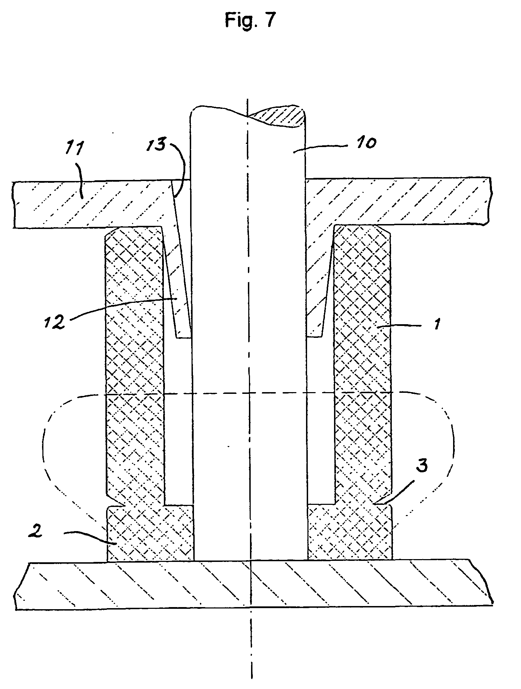

Wie in Fig. 7 dargestellt ist, kann das Federelement auf einer Stange 10 mit einer oberen Führungsplatte 11 dergestalt geführt sein, das ein Ansatz 12 mit konischer Außenfläche an der Krafteinleitungsseite in das Rohrstück 1 hineinragt, wobei der maximale Durchmesser des Ansatzes 12 mit dem Innendurchmesser Di des Rohrstückes 1 übereinstimmt. Der Ansatz 12 dient als Hubbegrenzung und verhindert eine Überdehnung des Federelements. Eine nur in der linken Hälfte der Fig. 7 gezeigte Gestaltungsmöglichkeit besteht darin, die Führungsplatte 11 mit einem Innenkonus 13 auszubilden. Dadurch ist eine gelenkige Einspannstelle geschaffen. Unterhalb der Führungsplatte 11 können mehrere Federelemente nebeneinander angeordnet sein.

### Liste der Bezugszeichen

- 1: Rohrstück
- 2: Grundplatte
- 3: Nut
- 4: Schraube
- 5: Führungshülse
- 6: Abschrägung
- 7: Prallplatte
- 8: Führungsansatz
- 9: Ausnehmung
- 10: Stange
- 11: Führungsplatte
- 12: Ansatz mit konischer Außenfläche
- 13: Innenkonus
- Hg: Höhe des Federelementes
- He: Höhe des Rohrstückes
- Hf: Höhe der Führung
- Da: Außendurchmesser des Federelementes
- Di: Innendurchmesser des Rohrstückes
- Dmb: Außendurchmesser des Rohrstückes bei maximaler Belastung
- Db: Bohrungsdurchmesser

## Patentansprüche

1. Federelement aus elastischem Werkstoff, insbesondere aus Kunststoff (z. B. Polyurethan) zur Aufnahme kinetischer Energie, gebildet aus einem Rohrstück (1) mit einer Stirnfläche und einer mit dem Rohrstück fest verbundenen Grundplatte (2), wobei das Rohrstück (2) eine Wanddicke entsprechend einem Verhältnis Außendurchmesser (Da) zu Innendurchmesser (Di) von < 2 aufweist **dadurch gekennzeichnet, dass** das Federelement eine Bauhöhe (He) im Bereich des 0,7- bis 1,3-fachen des Außendurchmessers (Da) aufweist so dass bei einer Einfederung von 35% der ursprünglichen Bauhöhe sich ein teil der Rohrwandung in einem Winkel von ca. 45° zur Rohrachse ausgeform hat und nachfolgend am offenen Ende des Rohrstückes (1) eine Umstülpung der Stirnfläche stattfindet.

2. Federelement nach Anspruch 1, **dadurch gekennzeichnet, dass** im Übergangsbereich von Rohrstück (1) und Grundplatte (2) eine äußere, umlaufende Nut (3) angeordnet ist, die eine spannungsmäßig günstigere Verformung des Rohrstückes (1) bewirkt.

3. Federelement nach Anspruch 1 oder 2, **dadurch gekennzeichnet, dass** im Zentrum der Grundplatte (2) eine Bohrung vorgesehen ist, die mit Hilfe eines Verbindungsmittels (Schraube 4) ein horizontales oder vertikales Befestigen des Federelementes an einem vor Überlastung zu schützenden Bauteil ermöglicht.

4. Federelement nach einem der Ansprüche 1 bis 3, **gekennzeichnet durch** eine innere Führungshülse (5) zum Führen des Rohrstückes (1), wobei der Außendurchmesser der Führungshülse (5) gleich dem Innendurchmesser (Di) des Rohrstückes (1) ist und die Höhe (Hf) der Führungsfläche mindestens das 0,2-fache der Bauhöhe (He) des Rohrstückes (1) beträgt.

5. Federelement nach Anspruch 4, **dadurch gekennzeichnet, dass** die Führungshülse (5) mit einer Abschrägung (6) oder einer Abstufung ausgestattet ist, die ein leichteres Vorbeiführen der umgestülpten kraftbeaufschlagten Fläche des Rohrstückes (1) während der weiteren Belastung erbringt.

6. Federelement nach Anspruch 4 oder 5, **dadurch gekennzeichnet, dass** die Führungshülse (6) eine quer zur Kraftrichtung angeordnete Fläche aufweist, über die bei Berührung mit der krafteinleitenden Fläche des Rohrstükkes (1) eine Weiterleitung der Kräfte auf die Grundplatte (2) erfolgt, wodurch eine Steigerung der Arbeitsaufnahme vor dem Ende des Hubes erzielt wird.

7. Federelement nach einem der Ansprüche 1 bis 6, **gekennzeichnet durch** eine innere Hubbegrenzung zum Schutz vor Überlastung, die vorzugsweise **durch** eine quer zur Kraftrichtung angeordnete Fläche des Verbindungsmittels (4) gebildet ist.

8. Federelement nach Anspruch 1, **dadurch gekennzeichnet, daß** das Federelement auf einer Stange (10) mit einer oberen Führungsplatte (11) dergestalt geführt ist , daß ein mit einer konischen Außenfläche versehener Ansatz (12) der Führungsplatte (11) an der Krafteinleitungsseite in das Rohrstück (1) hineinragt, wobei der maximale Durchmesser des Ansatzes (12) mit dem Innendurchmesser (Di) des Rohrstückes (1) übereinstimmt.

## Claims

1. Spring element made of an elastic material, especially plastics (e.g. polyurethane), for absorbing kinetic energy, formed from a tube section (1) having an end face and a base plate (2) securely connected to the tube section, said tube section (1) having a wall thickness corresponding to a ratio between an outer diameter (Da) and an inner diameter (Di) of < 2, **characterised in that** the spring element has a structural height (He) within the range of 0.7 to 1.3 times the outer diameter (Da), such that during spring deflection of 35% of the original structural height, a part of the tube wall is deformed at an angle of approx. 45° to the tube axis and subsequently the end face is inverted at the open end of the tube section (1).

2. Spring element according to claim 1, **characterised in that** in the transition region between the tube section (1) and the base plate (2) is arranged an outer circumferential groove (3) which causes a deformation of the tube section (1) which is more advantageous with regard to stress.

3. Spring element according to claim 1 or 2, **characterised in that** there is provided in the centre of the base plate (2) a bore which, with the aid of a connecting means (screw 4), makes possible horizontal or vertical mounting of the spring element on a component to be protected from overloading.

4. Spring element according to one of claims 1 to 3, **characterised by** an inner guiding sleeve (5) for guiding the tube section (1), the outer diameter of the guiding sleeve (5) being equal to the inner diameter (Di) of the tube section (1) and the height (Hf) of the guiding surface being at least 0.2 times the structural height (He) of the tube section (1).

5. Spring element according to claim 4, **characterised in that** the guiding sleeve (5) is provided with an incline (6) or a stepped portion which makes it easier to guide past the inverted force-receiving surface of the tube section (1) during further loading.

6. Spring element according to claim 4 or 5, **characterised in that** the guiding sleeve (6) has a surface arranged transversely with respect to the force direction and via which, on contact with the force-introducing surface of the tube section (1), there is further transmission of the forces to the base plate (2), by which means an increase in the work take-up is achieved before the end of the stroke.

7. Spring element according to one of claims 1 to 6, **characterised by** an inner stroke-limiting means for protection from overloading, which means is preferably formed by a surface of the connecting means (4), said surface being arranged transversely with respect to the force direction.

8. Spring element according to claim 1, **characterised in that** said spring element is guided on a rod (10) with an upper guiding plate (11) in such a way that an extension (12), provided with a conical outer surface, of the guiding plate (11) protrudes into the tube section (1) on the force-introducing side, the maximum diameter of the extension (12) matching the inner diameter (Di) of the tube section (1).

## Revendications

1. Elément à ressort en un matériau élastique, notamment en matière plastique (p. ex. en polyuréthanne) destiné à absorber de l'énergie cinétique, qui est formé par un segment de tube (1) comportant une surface frontale et par une plaque de base (2) reliée fixement au segment tube, le segment de tube (1) présentant une épaisseur de paroi correspondant à un rapport entre le diamètre extérieur (Da) et le diamètre intérieur (Di) < 2, **caractérisé en ce que** l'élément à ressort présente une hauteur (He) située dans une fourchette comprise entre 0,7 et 1,3 fois le diamètre extérieur (Da), si bien qu'en cas de compression de 35% de la hauteur initiale, une partie de la paroi du tube se déforme avec un angle de 45° par rapport à l'axe du tube, puis la surface frontale se replie à l'extrémité ouverte du segment de tube (1).

2. Elément à ressort selon la revendication 1, **caractérisé en ce que** dans la zone de transition entre le segment de tube (1) et la plaque de base (2) est ménagée une rainure (3) circulaire extérieure qui provoque une déformation plus intense du segment de tube (1).

3. Elément à ressort selon la revendication 1 ou 2, **caractérisé en ce qu'**au centre de la plaque de base (2) est prévu un perçage qui permet, à l'aide d'un moyen d'assemblage (vis 4), de fixer l'élément à ressort horizontalement ou verticalement sur un élément à protéger d'une sollicitation excessive.

4. Elément à ressort selon l'une des revendications 1 à 3, **caractérisé par** une douille de guidage interne (5) pour guider le segment de tube (1), sachant que le diamètre extérieur de la douille de guidage (5) est égal au diamètre intérieur (Di) du segment de tube (1) et que la hauteur (Hf) de la surface de guidage s'élève à au moins 0,2 fois la hauteur (He) du segment de tube (1).

5. Elément à ressort selon la revendication 4, **caractérisé en ce que** la douille de guidage (5) est dotée d'un chanfrein (6) ou d'un gradin qui facilite le passage de la surface repliée du segment de tube (1) sollicitée par les forces pendant la sollicitation ultérieure.

6. Elément à ressort selon la revendication 4 ou 5, **caractérisé en ce que** la douille de guidage (5) présente une surface orientée transversalement par rapport à la direction dans laquelle s'exercent les forces, qui, lorsqu'elle touche la surface du segment de tube (1) sur laquelle s'exercent les forces, transmet lesdites forces à la plaque de base (2), ce qui permet d'accroître la capacité d'absorption avant la fin de la course.

7. Elément à ressort selon l'une des revendications 1 à 6, **caractérisé par** une limitation interne de la course en tant que protection contre la surcharge, qui est de préférence constituée par une surface du moyen d'assemblage (4) qui est disposée transversalement par rapport à la direction dans laquelle s'exercent les forces.

8. Elément à ressort selon la revendication 1, **caractérisé en ce que** l'élément à ressort est guidé sur une barre (10) dotée d'une plaque de guidage supérieure (11) de telle manière qu'une saillie (12) de la plaque de guidage (11) dotée d'une surface extérieure conique pénètre dans le segment de tube (1) par le côté sur lequel s'exercent les forces, le diamètre maximal de la saillie (12) coïncidant avec le diamètre intérieur (Di) du segment de tube (1).
